# EUROPEAN PATENT APPLICATION

(11) **EP 4 216 461 A1**
(43) Date of publication of application: **26.07.2023**
(21) Application number: 21777364.7
(22) Date of filing: 01.09.2021

(54) **RIDER-ASSISTANCE SYSTEM AND METHOD, INTERFACE DEVICE, AND CONTROL METHOD AND CONTROL PROGRAM FOR SAID INTERFACE DEVICE**

(30) Priority: 16.09.2020 JP 2020155720
(71) Applicant: Robert Bosch GmbH, 70442 Stuttgart (DE)
(72) Inventor: SHU, Absalom, Yokohama-shi, Kanagawa 224-8501 (JP)
(74) Representative: Isarpatent
(86) International application number: PCT/IB2021/057976
(87) International publication number: WO 2022/058828

(57) **Abstract**

The present invention obtains a rider-assistance system and a rider-assistance method capable of appropriately assisting a rider, an interface device used for such a rider-assistance system, and a control method and a control program for such an interface device.

A rider-assistance system (1) that executes assistance operation for a rider of a straddle-type vehicle (20) includes an interface device (10) including: a guidance section (11) that provides guidance on a purchase of a function for the assistance operation by the rider; an acceptance section (12) that accepts the purchase of the function by the rider; and a communication section (13) that directly or indirectly communicates with an external system (100) wirelessly, the external system (100) including a charging section (101) for the purchase of the function. The acceptance section (12) sets a limited use-by date of the function and accepts the purchase thereof.

## Description

### Technical Field

The present invention relates to a rider-assistance system that executes assistance operation for a rider of a straddle-type vehicle, a rider-assistance method for executing assistance operation for a rider of a straddle-type vehicle, an interface device used for the rider-assistance system, a control method for the interface device, and a control program for the interface device.

### Background Art

As a conventional rider-assistance system, the following rider-assistance system has been known. In the rider-assistance system, a controller is provided to a straddle-type vehicle and uses an execution program having a function that is purchased by a rider using an interface device, so as to execute assistance operation for the rider of the straddle-type vehicle (for example, see PTL 1) . The interface device includes: a guidance section that provides the rider with guidance on a purchase of a function; an acceptance section that accepts the purchase of the function by the rider; and a communication section that directly or indirectly communicates with an external system wirelessly, and the external system includes a charging section for the purchase of the function.

### Citation List

### Patent Literature

PTL 1: WO 2018/223234 (paragraph 44)

### Summary of Invention

### Technical Problem

When the purchase of the function by the rider is completed, in the conventional rider-assistance system, the controller in the straddle-type vehicle can cause the straddle-type vehicle to permanently execute the assistance operation using the execution program of such a function. When making such a purchase, the rider has to bear a high cost with the assumption of permanent use. However, a degree dependency of the straddle-type vehicle on the rider's body movement is extremely higher than that of other types of vehicles. Thus, in regard to the use in the straddle-type vehicle, the required assistance operation can significantly vary even with a slight change in the rider's state (for example, a physical state, a psychological state, or the like). For this reason, in an aspect that the controller in the straddle-type vehicle can permanently execute the assistance operation using the execution program of the purchased function, such a situation possibly arises that the rider refrains from purchasing the function by considering a change in usefulness of the function in the future. As a result, the rider-assistance system may not be able to appropriately assist the rider.

The present invention has been made to solve the above-described problem and therefore obtains a rider-assistance system and a rider-assistance method capable of appropriately assisting a rider, an interface device used for such a rider-assistance system, and a control method and a control program for such an interface device.

### Solution to Problem

A rider-assistance system according to the present invention is a rider-assistance system that executes assistance operation for a rider of a straddle-type vehicle, and includes an interface device and a controller. The interface device includes: a guidance section that provides guidance on a purchase of a function for the assistance operation by the rider; an acceptance section that accepts the purchase of the function by the rider; and a communication section that directly or indirectly communicates with an external system wirelessly, the external system including a charging section for the purchase of the function. The controller is provided to the straddle-type vehicle and causes the straddle-type vehicle to execute the assistance operation by using an execution program of the function purchased by the rider. The acceptance section sets a limited use-by date of the function and accepts the purchase of the function.

A rider-assistance method according to the present invention is a rider-assistance method for executing assistance operation for a rider of a straddle-type vehicle, and includes: a guidance step in which a guidance section in an interface device provides guidance on a purchase of a function for the assistance operation by the rider; an acceptance step in which an acceptance section in the interface device accepts the purchase of the function by the rider; a communication step in which a communication section in the interface device directly or indirectly communicates with an external system wirelessly, the external system including a charging section for the purchase of the function; and an execution step in which a controller provided to the straddle-type vehicle causes the straddle-type vehicle to execute the assistance operation by using an execution program of the function purchased by the rider. In the acceptance step, the acceptance section sets a limited use-by date of the function and accepts the purchase of the function.

An interface device according to the present invention is an interface device that is used for a rider-assistance system executing assistance operation for a rider of a straddle-type vehicle, and includes: a guidance section that provides guidance on a purchase of a function for the assistance operation by the rider; an acceptance section that accepts the purchase of the function by the rider in order to cause a controller provided to the straddle-type vehicle to execute the assistance operation by using an execution program of the function purchased by the rider; and a communication section that directly or indirectly communicates with an external system wirelessly, the external system including a charging section for the purchase of the function. The acceptance section sets a limited use-by date of the function and accepts the purchase of the function.

A control method for an interface device according to the present invention is a control method for an interface device that is used for a rider-assistance system executing assistance operation for a rider of a straddle-type vehicle, and includes: a guidance step in which a guidance section in the interface device provides guidance on a purchase of a function for the assistance operation by the rider; an acceptance step in which an acceptance section in the interface device accepts the purchase of the function by the rider in order to cause a controller provided to the straddle-type vehicle to execute the assistance operation by using an execution program of the function purchased by the rider; and a communication step in which a communication section in the interface device directly or indirectly communicates with an external system wirelessly, the external system including a charging section for the purchase of the function. In the acceptance step, the acceptance section sets a limited use-by date of the function and accepts the purchase of the function.

A control program for an interface device according to the present invention is a control program for an interface device that is used for a rider-assistance system executing assistance operation for a rider of a straddle-type vehicle, the control program for the interface device causing the interface device to execute: a guidance step in which a guidance section in the interface device provides guidance on a purchase of a function for the assistance operation by the rider; an acceptance step in which an acceptance section in the interface device accepts the purchase of the function by the rider in order to cause a controller provided to the straddle-type vehicle to execute the assistance operation by using an execution program of the function purchased by the rider; and a communication step in which a communication section in the interface device directly or indirectly communicates with an external system wirelessly, the external system including a charging section for the purchase of the function. The acceptance section sets a limited use-by date of the function and accepts the purchase of the function in the acceptance step. Advantageous Effects of Invention

In each of the rider-assistance system, the rider-assistance method, the interface device, the control method for the interface device, and the control program for the interface device according to the present invention, the acceptance section that accepts the purchase of the function by the rider sets the limited use-by date of the function and accepts the purchase thereof. Accordingly, it is possible to suppress occurrence of such a situation that the rider refrains from purchasing the function by considering a change in usefulness of the function in the future. As a result, the rider-assistance system can appropriately assist the rider.

### Brief Description of Drawings

Fig. 1 is a view for illustrating a schematic configuration of a rider-assistance system according to an embodiment of the present invention.
Fig. 2 is a chart illustrating a processing flow by the rider-assistance system according to the embodiment of the present invention.

### Description of Embodiments

A description will hereinafter be made on a rider-assistance system, a rider-assistance method, an interface device, a control method for the interface device, and a control program for the interface device according to the present invention with reference to the drawings.

Each of a configuration, operation, and the like, which will be described below, is merely one example, and the rider-assistance system, the rider-assistance method, the interface device, the control method for the interface device, and the control program for the interface device according to the present invention are not limited to a case with such a configuration, such operation, and the like.

For example, a description will hereinafter be made on a case where the rider-assistance system according to the present invention is used for a two-wheeled motor vehicle. However, the rider-assistance system according to the present invention may be used for a straddle-type vehicle other than the two-wheeled motor vehicle. The straddle-type vehicle means a vehicle in general that a rider straddles. The straddle-type vehicles include motorcycles (the two-wheeled motor vehicle and a three-wheeled motor vehicle), an all-terrain vehicle, a pedal-driven vehicle, and the like. The motorcycles include: the two-wheeled motor vehicle or the three-wheeled motor vehicle that has an engine as a propelling source; the two-wheeled motor vehicle or the three-wheeled motor vehicle that has a motor as the propelling source; and the like, and examples of the motorcycles include a bike, a scooter, and an electric scooter. The pedal-driven vehicle means a vehicle in general that can travel forward on a road by a depression force applied to pedals by the rider. The pedal-driven vehicles include a normal pedal-driven vehicle, an electrically-assisted pedal-driven vehicle, an electric pedal-driven vehicle, and the like.

In addition, a detailed structure will appropriately be illustrated in a simplified manner or will not be illustrated. Furthermore, an overlapping or similar description will not be made or will appropriately be simplified.

### Embodiment

A description will hereinafter be made on a rider-assistance system according to an embodiment.

### <Configuration of Rider-Assistance System>

A description will be made on a configuration of the rider-assistance system according to the embodiment.

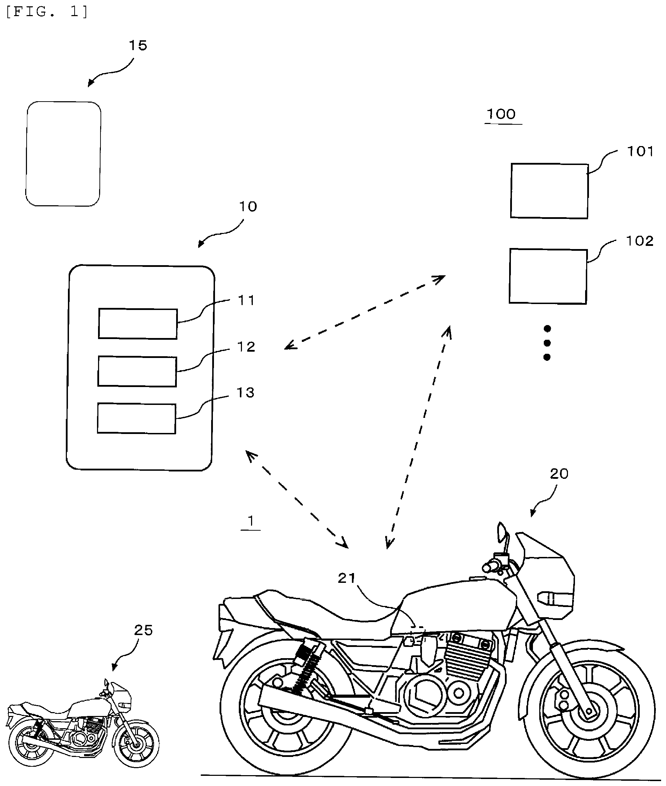

Fig. 1 is a view for illustrating a schematic configuration of the rider-assistance system according to the embodiment of the present invention.

As illustrated in Fig. 1, a rider-assistance system 1 at least includes an interface device 10 and a controller 21 that is provided to a straddle-type vehicle 20.

The interface device 10 may be a portable wireless terminal (for example, a smartphone, a tablet computer, or the like), may be a terminal that is incorporated into the straddle-type vehicle 20, or may be a combination of those. Fig. 1 illustrates a case where the interface device 10 is the portable wireless terminal. In the case where the interface device 10 is the terminal that is incorporated into the straddle-type vehicle 20, the interface device 10 may have a function as an input terminal and/or an output terminal of the controller 21, or may not have such a function. In addition, the input terminal and/or the output terminal of the controller 21 may partially or entirely be incorporated into the portable wireless terminal.

The interface device 10 at least includes a guidance section 11, an acceptance section 12, and a communication section 13. Each of the guidance section 11, the acceptance section 12, and the communication section 13 may be constructed of a microcomputer, a microprocessor unit, or the like, may be constructed of a member in which firmware or the like can be updated, or may be a control program or the like that is executed by a command from a CPU or the like, for example. The sections of the interface device 10 may collectively be provided in a single casing or may separately be provided in multiple casings. Each of the sections in the interface device 10 may collectively be provided in a single casing or may separately be provided in multiple casings.

The guidance section 11 provides guidance on a purchase of a function for assistance operation for a rider of the straddle-type vehicle 20 by the rider. The guidance section 11 may provide the guidance by display or may provide the guidance by voice. For example, the guidance section 11 provides the rider with a list of functions that can be purchased, a price of each of the functions, a description of each of the functions, and the like. Examples of the functions that can be purchased are: a function of causing the straddle-type vehicle 20 to execute hill hold control operation; a function of causing the straddle-type vehicle 20 to execute adaptive cruise control operation; a function of causing the straddle-type vehicle 20 to execute cruise control operation; a function of causing the straddle-type vehicle 20 to execute automatic emergency brake operation; a function of causing the straddle-type vehicle 20 to execute various types of warning operation including obstacle warning operation; and a function of causing the straddle-type vehicle 20 to execute travel operation in a special setting (for example, travel operation in a setting for circuit, travel operation in a setting for off-road, or the like).

The acceptance section 12 accepts the purchase of the function for the assistance operation for the rider of the straddle-type vehicle 20 by the rider. The acceptance section 12 may accept the purchase of the function according to an operation of the interface device 10 by the rider or may accept the purchase of the function according to voice input by the rider.

Preferably, the acceptance section 12 can set a limited use-by date of the function and accept the purchase of the function. That is, the rider does not have to purchase the desired function with the assumption of permanent use. The use-by date may be set when the rider inputs or selects an expiration date, when the rider inputs or selects a period, or when a provider of the function sets the expiration date or the period. Setting of an unlimited use-by date may be permitted or prohibited.

In addition, preferably, the acceptance section 12 can set use permission of the function for a different straddle-type vehicle 25 (for example, the straddle-type vehicle 25 that will be owned in the future, the straddle-type vehicle 25 that is rented in the future, or the like) from the straddle-type vehicle 20 and accept the purchase. That is, the rider does not have to purchase the desired function with the assumption of use of such a function only for the straddle-type vehicle 20 that is currently owned or rented. The different straddle-type vehicle 25 as a target of the use permission may be the same model as the straddle-type vehicle 20 that is currently owned or rented, or may be a different model from the straddle-type vehicle 20 that is currently owned or rented. The different straddle-type vehicle 25 as the target of the use permission may be set when the rider owns or rents the different straddle-type vehicle 25 and the rider inputs vehicle body identification information thereof, or may be set when the rider owns or rents the different straddle-type vehicle 25 and the vehicle body identification information thereof is automatically acquired.

The communication section 13 directly or indirectly communicates with a charging section 101 in an external system 100 wirelessly, and the charging section 101 charges the rider for the purchase of the function for the assistance operation for the rider of the straddle-type vehicle 20. When the acceptance section 12 of the interface device 10 accepts the purchase of the function by the rider, the communication section 13 of the interface device 10 sends information thereon to the charging section 101, and the purchase of the function by the rider is completed. Under a situation where the rider is permitted to use the function, the rider may be or may not be able to temporarily or permanently invalidate the function by himself/herself.

The controller 21 uses an execution program of the function that is purchased by the rider to cause the straddle-type vehicle 20 to execute the assistance operation. The controller 21 causes the straddle-type vehicle 20 to execute various types of the assistance operation on the basis of output of various sensors provided to the straddle-type vehicle 20. In addition, the controller 21 causes the straddle-type vehicle 20 to execute the assistance operation by using setting operation information, and the setting operation information is information on a setting operation that is input by the rider using an input terminal of the controller 21. In the case where the acceptance section 12 sets the limited use-by date of the function and accepts the purchase thereof, the controller 21 causes the straddle-type vehicle 20 to execute the assistance operation only when the use-by date thereof has not passed. Whether the use-by date has passed may be determined by the interface device 10, may be determined by the external system 100, or may be determined by the controller 21. The controller 21 may cause the straddle-type vehicle 20 to execute the assistance operation only in a situation where communication with the interface device 10 or the external system 100 is established, or may cause the straddle-type vehicle 20 to execute the assistance operation regardless of the communication situation. The controller 21 may be provided as one unit or may be divided into plural units, for example. The controller 21 may partially or entirely be constructed of a microcomputer, a microprocessor unit, or the like, may be constructed of a member in which firmware or the like can be updated, or may be a control program or the like that is executed by a command from a CPU or the like, for example.

The external system 100 includes a storage section 102 in addition to the charging section 101. Each of the sections in the external system 100 may be constructed of a microcomputer, a microprocessor unit, or the like, may be constructed of a member in which firmware or the like can be updated, or may be a control program or the like that is executed by a command from a CPU or the like, for example. The sections of the external system 100 may collectively be provided in a single casing or may separately be provided in multiple casings . Each of the sections in the external system 100 may collectively be provided in a single casing or may separately be provided in multiple casings. In addition, the external system 100 may entirely or partially be constructed as a virtual server (for example, a cloud server, or the like).

The storage section 102 directly or indirectly sends stored information wirelessly to the interface device 10 when necessary. The storage section 102 may send the information to the interface device 10 via the controller 21 that is provided to the straddle-type vehicle 20. In addition, prior to validation of the guidance on the purchase of the function by the rider, the information may partially or entirely be sent to the interface device 10.

For example, the storage section 102 stores new information on a function that is newly released (for example, a completely new function, a function created by expanding an old function, or the like) . The storage section 102 acquires the new information from the provider of the function. When the interface device 10 receives the new information, the guidance section 11 provides the guidance that corresponds to the new information. For example, the guidance section 11 notifies the rider of the new information. In addition, for example, when providing the list of the functions that can be purchased, the guidance section 11 highlights the newly-released function.

For example, the storage section 102 stores, as personal data of the rider, information on the use-by date of the function purchased by the rider. The storage section 102 acquires the information on the use-by date from the acceptance section 12 in the interface device 10. When the interface device 10 receives the information on the use-by date, the guidance section 11 provides the guidance that corresponds to the information on the use-by date. For example, when the use-by date of the function that has been purchased before approaches, the guidance section 11 notifies the rider of such a fact. In addition, for example, when providing the list of the functions that can be purchased, the guidance section 11 highlights the function, the use-by date of which approaches. The storage section 102 may not store the information on the use-by date of the function that is purchased by the rider. When the storage section 102 stores the information on the use-by date, the storage section 102 can share such information with another interface device 15.

For example, the storage section 102 stores, as the personal data of the rider, history information of the purchase of the function by the rider. The storage section 102 acquires the history information from the acceptance section 12 in the interface device 10. When the interface device 10 receives the history information, the guidance section 11 provides the guidance that corresponds to the history information. For example, when a new function that is assumed to fit the rider's taste from the function purchased in the past or a function that is created by expanding the function purchased in the past is released, the guidance section 11 notifies the rider of such a fact. In addition, for example, when providing the list of the functions that can be purchased, the guidance section 11 highlights those functions. The storage section 102 may not store the history information of the purchase of the function by the rider. When the storage section 102 stores the history information, the storage section 102 can share such information with the other interface device 15.

For example, the storage section 102 stores, as the personal data of the rider, the setting operation information of the rider-assistance system 1 by the rider. The storage section 102 acquires the setting operation information from the controller 21. When the interface device 10 receives the setting operation information, the guidance section 11 provides the guidance that corresponds to the setting operation information. For example, when a new function that is assumed to fit the rider's taste from a tendency of the setting operation or a function that is created by expanding the old function assumed to fit the rider's taste from the tendency of the setting operation is released, the guidance section 11 notifies the rider of such a fact. In addition, for example, when providing the list of the functions that can be purchased, the guidance section 11 highlights those functions. In the case where the interface device 10 functions as the input terminal of the controller 21, the storage section 102 may not store the setting operation information. When the storage section 102 stores the setting operation information, the storage section 102 can share such information with the other interface device 15.

For example, the storage section 102 stores, as the personal data of the rider, vehicle driving information by the rider (for example, a driving characteristic, a driving record, an accident record, a violation record, a grade of vehicle insurance, and the like) . The vehicle driving information may be driving information of the straddle-type vehicle 20 itself, may be driving information of the other straddle-type vehicle 25, or may be a combination of those. In addition, other types of the personal data (for example, age, sex, body information, family makeup, and the like) may be added to the vehicle driving information. The storage section 102 acquires the vehicle driving information from the controller 21 and/or the other portion of the external system 100. When the interface device 10 receives the vehicle driving information, the guidance section 11 provides the guidance that corresponds to the vehicle driving information. For example, when a new function that is assumed to fit the rider's taste from the vehicle driving information or a function that is created by expanding the old function assumed to fit the rider's taste from the vehicle driving information is released, the guidance section 11 notifies the rider of such a fact. In addition, for example, when providing the list of the functions that can be purchased, the guidance section 11 highlights those functions. In the case where the interface device 10 can acquire the vehicle driving information without relying on the communication with another device, the storage section 102 may not store the vehicle driving information. When the storage section 102 stores the vehicle driving information, the storage section 102 can share such information with the other interface device 15.

For example, the storage section 102 stores use environment information of the straddle-type vehicle 20 (for example, a road characteristic, a weather forecast, a use time period, and the like). The storage section 102 acquires the use environment information from the other portion of the external system 100. When the interface device 10 receives the use environment information, the guidance section 11 provides the guidance that corresponds to the use environment information. For example, the guidance section 11 extracts the function, use of which is recommended on the basis of the use environment information in a resident area or on a navigation route, and notifies the rider of the function. In addition, for example, when providing the list of the functions that can be purchased, the guidance section 11 highlights such a function. In the case where the interface device 10 can acquire the use environment information without relying on the communication with another device, the storage section 102 may not store the use environment information. When the storage section 102 stores the use environment information, the storage section 102 can share such information with the other interface device 15.

The storage section 102 directly or indirectly sends the stored information wirelessly to the controller 21, which is provided to the straddle-type vehicle 20, when necessary. The storage section 102 may send the information to the controller 21 via the interface device 10. In addition, prior to the purchase of the function by the rider, the information may partially or entirely be sent to the controller 21.

For example, the storage section 102 stores the execution program of the function that is purchased by the rider. The storage section 102 acquires the execution program from the provider of the function. The controller 21 receives the execution program and causes the straddle-type vehicle 20 to execute the assistance operation by using the execution program. The execution program may be a collection of all the programs that are required to execute the assistance operation of the function purchased for the straddle-type vehicle 20, may be configured to include some of those programs, or may be a program used to reflect the setting operation information of the other straddle-type vehicle 25 by the rider to operation of the controller 21. The execution program may forcibly be sent from the storage section 102 to the controller 21 without acquiring the rider's permission or may be sent after acquiring the rider's permission. In addition, when the execution program is forcibly sent without the rider's permission, the interface device 10 and/or the output terminal of the controller 21 may be notified of such sending or may not be notified of such sending.

For example, the storage section 102 stores an update program for updating the execution program of the function that is purchased by the rider. The storage section 102 acquires the update program from the provider of the function. The controller 21 receives the update program and causes the straddle-type vehicle 20 to execute the assistance operation by using the update program. The update program may be the latest version of the execution program that is currently used by the controller 21, or may be a program for partially modifying the execution program, which is currently used by the controller 21, to the latest version. The update program may forcibly be sent from the storage section 102 to the controller 21 without acquiring the rider's permission or may be sent after acquiring the rider's permission. In addition, when the update program is forcibly sent without the rider's permission, the interface device 10 and/or the output terminal of the controller 21 may be notified of such sending or may not be notified of such sending.

### <Operation of Rider-Assistance System>

A description will be made on operation of the rider-assistance system according to the embodiment.

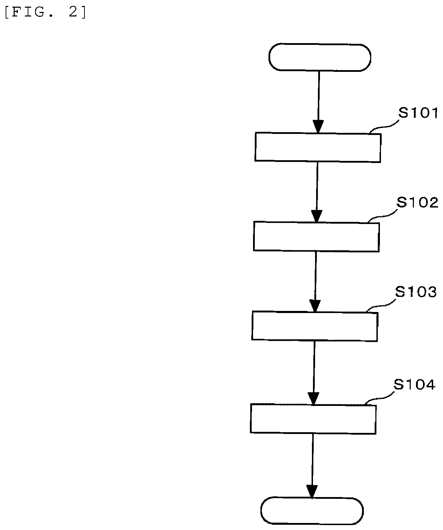

Fig. 2 is a chart illustrating an example of a processing flow by the rider-assistance system according to the embodiment of the present invention.

When the rider who owns or rents the straddle-type vehicle 20 validates the guidance on the purchase of the function for the straddle-type vehicle 20 by using the interface device 10 or the input terminal of the controller 21, the processing flow illustrated in Fig. 2 is executed.

### (Guidance Step)

In step S101, the guidance section 11 in the interface device 10 provides the guidance on the purchase of the function by the rider.

### (Acceptance Step)

In step S102, the acceptance section 12 in the interface device 10 accepts the purchase of the function by the rider, so as to cause the controller 21, which is provided to the straddle-type vehicle 20, to execute the assistance operation by using the execution program of the function purchased by the rider.

### (Communication Step)

In step S103, the communication section 13 in the interface device 10 directly or indirectly communicates with the charging section 101, which is used for the purchase of the function by the rider, in the external system 100 wirelessly.

### (Execution Step)

In step S104, the controller 21, which is provided to the straddle-type vehicle 20, uses the execution program of the function purchased by the rider to cause the straddle-type vehicle 20 to execute the assistance operation.

### <Effects of Rider-Assistance System>

A description will be made on effects of the rider-assistance system according to the embodiment.

In the rider-assistance system 1, the acceptance section 12, which accepts the purchase of the function by the rider, sets the limited use-by date of the function and accepts the purchase thereof. Accordingly, it is possible to suppress occurrence of such a situation that the rider refrains from purchasing the function by considering a change in usefulness of the function in the future. As a result, the rider-assistance system 1 can appropriately assist the rider.

Preferably, in the rider-assistance system 1, the guidance section 11 changes the guidance according to the information on the use-by date. With such a configuration, the rider is suppressed from failing to purchase the required or useful function, which improves reliability of the rider-assistance system 1 to appropriately assist the rider.

Preferably, in the rider-assistance system 1, the guidance section 11 changes the guidance according to the history information of the purchase of the function by the rider. With such a configuration, the rider is suppressed from failing to purchase the required or useful function, which improves the reliability of the rider-assistance system 1 to appropriately assist the rider.

Preferably, in the rider-assistance system 1, the guidance section 11 changes the guidance according to the use environment information of the straddle-type vehicle 20. With such a configuration, the rider is suppressed from failing to purchase the required or useful function, which improves the reliability of the rider-assistance system 1 to appropriately assist the rider.

Preferably, in the rider-assistance system 1, the communication section 13 wirelessly receives the new information of the function from the external system 100, and the guidance section 11 changes the guidance according to the new information received by the communication section 13. With such a configuration, the rider is suppressed from failing to purchase the required or useful function, which improves the reliability of the rider-assistance system 1 to appropriately assist the rider.

Preferably, in the rider-assistance system 1, the controller 21 causes the straddle-type vehicle 20 to execute the assistance operation by using the execution program that is directly or indirectly sent from the external system 100 wirelessly. With such a configuration, it is possible to reduce necessity of the rider to bring the straddle-type vehicle 20 to a manufacturer or a dealer in order to acquire the latest execution program upon the purchase of the function.

Preferably, in the rider-assistance system 1, the controller 21 causes the straddle-type vehicle 20 to execute the assistance operation by using the update program of the execution program that is directly or indirectly sent from the external system 100 wirelessly. With such a configuration, it is possible to reduce the necessity of the rider to bring the straddle-type vehicle 20 to the manufacturer or the dealer in order to modify the execution program of the function that is purchased and currently used.

Preferably, in the rider-assistance system 1, the acceptance section 12 sets the use permission of the function for the different straddle-type vehicle 25 from the straddle-type vehicle 20, and accepts the purchase of the function. With such a configuration, it is possible to further suppress the occurrence of such a situation that the rider refrains from purchasing the function by considering the change in the usefulness of the function in the future. As a result, the reliability of the rider-assistance system 1 to appropriately assist the rider is improved.

The description has been made so far on the embodiment. However, the present invention is not limited to the description of the embodiment. That is, the present invention includes modes in each of which the embodiment that has been described so far is modified. For example, only a part of the embodiment may be implemented, or a part of the embodiment may be modified.

### Reference Signs List

- 1:: Rider-assistance system
- 10:: Interface device
- 11:: Guidance section
- 12:: Acceptance section
- 13:: Communication section
- 15:: Another interface device
- 20:: Straddle-type vehicle
- 21:: Controller
- 25:: Another straddle-type vehicle
- 100:: External system
- 101:: Charging section
- 102:: Storage section

## Claims

1. A rider-assistance system (1) that executes assistance operation for the rider of a straddle-type vehicle (20), the rider-assistance system comprising:
an interface device (10) that includes: a guidance section (11) that provides guidance on a purchase of a function for the assistance operation by the rider; an acceptance section (12) that accepts the purchase of the function by the rider; and a communication section (13) that directly or indirectly communicates with an external system (100) wirelessly, the external system (100) including a charging section (101) for the purchase of the function; and
a controller (21) that is provided to the straddle-type vehicle (20) and causes the straddle-type vehicle (20) to execute the assistance operation by using an execution program of the function purchased by the rider, wherein
the acceptance section (12) sets a limited use-by date of the function and accepts the purchase of the function.

2. The rider-assistance system according to claim 1, wherein
the guidance section (11) changes the guidance according to information on the use-by date.

3. The rider-assistance system according to claim 1 or 2, wherein
the guidance section (11) changes the guidance according to history information of the purchase of the function by the rider.

4. The rider-assistance system according to any one of claims 1 to 3, wherein
the guidance section (11) changes the guidance according to use environment information of the straddle-type vehicle (20).

5. The rider-assistance system according to any one of claims 1 to 4, wherein
the communication section (13) receives new information of the function from the external system (100) wirelessly, and
the guidance section (11) changes the guidance according to the new information that is received by the communication section (13).

6. The rider-assistance system according to any one of claims 1 to 5, wherein
the controller (21) causes the straddle-type vehicle (20) to execute the assistance operation by using the execution program that is directly or indirectly sent from the external system (100) wirelessly.

7. The rider-assistance system according to any one of claims 1 to 6, wherein
the controller (21) causes the straddle-type vehicle (20) to execute the assistance operation by using an update program of the execution program that is directly or indirectly sent from the external system (100) wirelessly.

8. The rider-assistance system according to any one of claims 1 to 7, wherein
the acceptance section (12) sets use permission of the function for a different straddle-type vehicle (25) from the straddle-type vehicle (20), and accepts the purchase of the function.

9. The rider-assistance system according to any one of claims 1 to 8, wherein
at least a part of the interface device (10) is configured as a portable wireless terminal.

10. The rider-assistance system according to any one of claims 1 to 8, wherein
at least a part of the interface device (10) is configured as a terminal that is incorporated into the straddle-type vehicle (20).

11. A rider-assistance method for executing assistance operation for a rider of a straddle-type vehicle (20), the rider-assistance method comprising:
a guidance step (S101) in which a guidance section (11) in an interface device (10) provides guidance on a purchase of a function for the assistance operation by the rider;
an acceptance step (S102) in which an acceptance section (12) in the interface device (10) accepts the purchase of the function by the rider;
a communication step (S103) in which a communication section (13) in the interface device (10) directly or indirectly communicates with an external system (100) wirelessly, the external system (100) including a charging section (101) for the purchase of the function; and
an execution step (S104) in which a controller (21) provided to the straddle-type vehicle (20) causes the straddle-type vehicle (20) to execute the assistance operation by using an execution program of the function purchased by the rider, wherein
in the acceptance step (S102), the acceptance section (12) sets a limited use-by date of the function and accepts the purchase of the function.

12. An interface device (10) that is used for a rider-assistance system (1) executing assistance operation for a rider of a straddle-type vehicle (20), the interface device comprising:
a guidance section (11) that provides guidance on a purchase of a function for the assistance operation by the rider;
an acceptance section (12) that accepts the purchase of the function by the rider in order to cause a controller (21) provided to the straddle-type vehicle (20) to execute the assistance operation by using an execution program of the function purchased by the rider; and
a communication section (13) that directly or indirectly communicates with an external system (100) wirelessly, the external system (100) including a charging section (101) for the purchase of the function, wherein
the acceptance section (12) sets a limited use-by date of the function and accepts the purchase of the function.

13. A control method for an interface device (10) that is used for a rider-assistance system (1) executing assistance operation for a rider of a straddle-type vehicle (20), the control method for the interface device comprising:
a guidance step (S101) in which a guidance section (11) in the interface device (10) provides guidance on a purchase of a function for the assistance operation by the rider;
an acceptance step (S102) in which an acceptance section (12) in the interface device (10) accepts the purchase of the function by the rider in order to cause a controller (21) provided to the straddle-type vehicle (20) to execute the assistance operation by using an execution program of the function purchased by the rider; and
a communication step (S103) in which a communication section (13) in the interface device (10) directly or indirectly communicates with an external system (100) wirelessly, the external system (100) including a charging section (101) for the purchase of the function, wherein
in the acceptance step (S102), the acceptance section (12) sets a limited use-by date of the function and accepts the purchase of the function.

14. A control program for an interface device (10) that is used for a rider-assistance system (1) executing assistance operation for a rider of a straddle-type vehicle (20), the control program for the interface device causing the interface device (10) to execute:
a guidance step (S101) in which a guidance section (11) in the interface device (10) provides guidance on a purchase of a function for the assistance operation by the rider;
an acceptance step (S102) in which an acceptance section (12) in the interface device (10) accepts the purchase of the function by the rider in order to cause a controller (21) provided to the straddle-type vehicle (20) to execute the assistance operation by using an execution program of the function purchased by the rider; and
a communication step (S103) in which a communication section (13) in the interface device (10) directly or indirectly communicates with an external system (100) wirelessly, the external system (100) including a charging section (101) for the purchase of the function, wherein
in the acceptance step (S102), the acceptance section (12) sets a limited use-by date of the function and accepts the purchase of the function.
